# EUROPÄISCHE PATENTSCHRIFT

(11) **EP 0 658 178 B1**
(45) Veröffentlichungstag und Bekanntmachung des Hinweises auf die Patenterteilung: **07.01.1998**
(21) Anmeldenummer: 94923709.3
(22) Anmeldetag: 01.07.1994
(51) Int. Cl.: C08L 25/14, C08L 51/00, B32B 27/30

(54) **FOLIE ODER FORMKÖRPER AUS EINEM MEHRPHASIGEN KUNSTSTOFF SOWIE DESSEN VERWENDUNG ZUR HERSTELLUNG VON VERBUNDFOLIEN**
SHEETING OR MOULDING MADE OF MULTI-PHASE PLASTIC AND ITS USE IN THE MANUFACTURE OF COMPOSITE SHEETING
FEUILLE OU PIECE MOULEE EN MATIERE PLASTIQUE MULTIPHASE ET SON UTILISATION DANS LA FABRICATION DE FEUILLES COMPOSITES

(30) Priorität: 02.07.1993 DE 4322145
(43) Veröffentlichungstag der Anmeldung: 21.06.1995
(73) Patentinhaber: Benecke-Kaliko Aktiengesellschaft, D-30419 Hannover (DE)
(72) Erfinder: LEISS, Dirk, D-30938 Grossburgwedel (DE)
(74) Vertreter: Hagemann, Heinrich, Dr.rer.nat., Dipl.-Chem.
(86) Internationale Anmeldenummer: EP9402157
(87) Internationale Veröffentlichungsnummer: WO9501400

(56) Entgegenhaltungen:
- DE-A- 4 211 415

## Beschreibung

Die Erfindung betrifft eine Folie oder einen Formkörper aus einem mehrphasigen thermoplastischen Kunststoff, der einen elastomermodifizierten Thermoplast, einen oder mehrere Modifikatoren und gegebenenfalls Verarbeitungshilfsmittel, Farbmittel, Stabilisatoren und andere übliche Zusatzstoffe enthält, sowie die Verwendung der Folie zur Herstellung einer Verbundfolie.

Aus der DE-OS 34 29 523 sind Folien bekannt, die ein elastomergepfropftes Styrol-Acrylnitril-Copolymerisat (ASA) enthalten. Als Modifikator enthält diese Folie chloriertes Polyethylen (PEC), kautschukartiges Ethylen-Propylen-Copolymerisat (EPM) und/oder ein kautschukartiges Terpolymerisat aus Ethylen, Propylen und einem Dien (EPDM). Das Gewichtsverhältnis vom ASA zu dem jeweiligen Modifikator bzw. - gemisch liegt zwischen 8:2 bis 3:7. Es hat sich gezeigt, daß das EPM sowie das EPDM mit dem ASA nicht wünschenswert verträglich sind. Hierdurch kann bei weiterverarbeitenden Maßnahmen eine unerwünschte Entmischung auftreten. Der Nachteil des PEC liegt insbesondere in seinem Chlorgehalt. Daher wird es im Hinblick auf den Umweltschutz seit einiger Zeit abgelehnt.

Die DE-OS 40 19 799 befaßt sich mit Folien, die insbesondere als Lederersatz dienen. Sie enthalten ein thermoplastisches Polyurethan A) und ein zumindest partiell vernetztes Alkylacrylatcopolymer B) aus B1) einem C₁-C₆-Alkylacrylat und B2) Acrylnitril, Styrol, Vinylacetat.

Die DE-OS 42 11 415 betrifft eine Folie oder einen Formkörper aus einem mehrphasigen thermoplastischen Kunststoff, der einen elastomermodifizierten Thermoplast und einen Modifikator enthält. Der elastomermodifizierte Thermoplast A ist ein Acrylnitril-Styrol-Acrylester-Copolymer und/oder ein Acrylnitril-Ethylen-Propylen-Dien-Styrol-Copolymer, und der Modifikator B weist einen Kristallinitätsgrad von weniger als etwa 25% auf und kann ein thermoplastisches Polyurethan, Polycaprolacton, ein Ethylen-Ethylacrylat-Copolymer und/oder ein Ethylen-Vinylacetat-Kohlenmonoxid-Terpolymer darstellen.

Im Hinblick auf eine Analyse des Standes der Technik sowie die sich daraus ergebenden Folgerungen bestand die Aufgabe der vorliegenden Erfindung darin, polymere und monomere äußere Weichmacher und auch, wenn gewünscht, härtende Komponenten für eine Folie der eingangs beschriebenen Art zu finden, die einen möglichst geringen Kristallinitätsgrad haben bzw. insbesondere amorph sind, die jedoch insbesondere mit ASA mischbar sind. Daraus soll insbesondere eine Herabsetzung der Shore-Härte D und des E-Moduls resultieren, um einen möglichst angenehmen Griff der Folie zu erhalten. Im Falle des Einsatzes von monomeren äußeren Weichmachern sollen diese migrationsbeständig sein und möglichst keinen Einfluß auf das beim Einsatz entsprechender Folien in Fahrzeuginnenräumen auftretende Foggingphänomen ausüben. Ganz besonders stellt die Erfindung darauf ab, daß die angestrebten Folien bzw. Formkörper gegenüber dem Stand der Technik verbesserte E-Modul- und Reißfestigkeitswerte aufweisen. Eine derartige Folie soll insbesondere als PVC-Substitut herangezogen werden, wobei die jeweils geforderte Spezifikation leicht einstellbar sein soll.

In einem ersten Aspekt betrifft die vorliegende Erfindung eine Folie oder einen Formkörper der eingangs bezeichneten Art, wobei der elastomermodifizierte Thermoplast ein Acrylnitril-Styrol-Acrylester-Copolymer (ASA) eines Acrylesteranteils von 25 bis 80 Gew.-% ist, das Mischungsverhältnis (Gewicht/Gewicht) von elastomermodifiziertem Acrylnitril-Styrol-Acrylester-Copolymer (ASA) zu modifizierendem äußeren Weichmacher 9:1 bis 1:1 beträgt und der modifzierende äußere Weichmacher darstellt:
**I)** eine Kombination
   a) eines monomeren oder oligomeren Weichmachers, der zur Weichmachung von PVC üblich ist, und
   b) eines amorphen oder teilkristallinen polymeren Weichmachers eines Kristallinitätsgrades von höchstens 25 % in Form von Ethylen-Vinylacetat-Copolymer (EVA), Ethylen-Butylacrylat-Copolymer (EBA), hydriertem und nicht hydriertem Styrol-Butadien-Styrol-Blockcopolymer (SEBS bzw. SBS) und/oder Acrylnitril-Styrol-Acrylester-Copolymer (ASA) eines Acrylesteranteils von 70 bis 80 Gew.- % oder
**II)** einen monomeren oder oligomeren Weichmacher, der zur Weichmachung von PVC üblich ist, oder
**III)** einen amorphen oder teilkristallinen polymeren Weichmacher eines Kristallinitätsgrades von höchstens 25% in Form von Ethylen-Butylacrylat-Copolymer (EBA), nicht hydriertem Styrol-Butadien-Styrol-Block-Copolymer (SBS) und/oder Acrylnitril-Styrol-Acrylester-Copolymer (ASA) eines Acrylesteranteils von 70 bis 80 Gew.-%.

In einem zweiten Aspekt betrifft die Erfindung eine Folie oder Formkörper der eingangs bezeichneten Art, wobei der elastomermodifizierte Thermoplast ein Acrylnitril-Styrol-Acrylester-Copolymer (ASA) eines Acrylesteranteils von 25 bis 80 Gew.-% ist und zur Anhebung der Härte eines weichen ASA-Copolymers als Modifikator ein Polymer hinreichender Verträglichkeit mit dem ASA-Copolymer und eines E-Moduls von > 2000 N/mm² einverleibt ist, wobei das Mischungsverhältnis von weichem ASA-Copolymer zu härtendem Copolymer 20:1 bis 1:1 beträgt.

Nachfolgend soll die Modifizierungsvariante **1)** im einzelnen beschrieben werden.

Im Rahmen der Erfindung können auch zwei unterschiedliche Acrylnitril-Styrol-Acrylester-Copolymere (ASA) eingesetzt werden. Nachfolgend soll im Falle des elastomermodifizierten Thermoplasts vom "elastomermodifizierten ASA" und im Falle des als Modifikator eingesetzten ASA vom ASA-Modifikator gesprochen werden.

Das Mischungsverhältnis von elastomermodifiziertem ASA zu den bezeichneten Modifikatoren liegt in dem Falle, daß eine weiche Folie angestrebt wird, mehr am unteren Grenzwert von 1:1, insbesondere zwischen 2,5:1. Soll eine größere Härte eingestellt werden, dann liegt das Mischungsverhältnis insbesondere zwischen 9:1 bis 3:1.

Der Acrylester im elastomermodifizierten ASA wie auch im ASA-Modifikator unterliegt keiner kritischen Beschränkung. So kann es sich dabei insbesondere um einen C₁-C₆-Alkylester, vorzugsweise um Butylacrylat handeln. Wenn hier von "Acrylester" gesprochen wird, so soll darunter auch ein "Methacrylester" verstanden werden.

Das elastomermodifizierte ASA enthält vorzugsweise 30 bis 65 Gew.-% Acrylester, insbesondere 43 bis 63 Gew.-%. Demgegenüber enthält der ASA-Modifikator 70 bis 80 Gew.-% Acrylester, insbesondere 70 bis 75 Gew.-% Acrylester. In jedem Fall lassen sich durch einen unterschiedlichen Gehalt an Alkylacrylat, insbesondere Butylacrylat, die Eigenschaften der Folie steuern bzw. beeinflussen. Eine weitere Steuerungsmöglichkeit besteht darin, daß das elastomermodifizierte ASA mit einem Acrylnitril-Butylacrylat-Copolymer mechanisch gemischt wird, wobei dieses Gemisch vorzugsweise 50 bis 70 Gew.-% elastomermodifiziertes ASA, insbesondere 58 bis 63 Gew.-% elastomermodifiziertes ASA, enthält.

Für die Zwecke der Erfindung ist es wesentlich, daß der angesprochene polymere Modifikator einen möglichst geringen Kristallinitätsgrad von weniger als 25%, insbesondere weniger als 15% und ganz besonders von weniger als 5% aufweist. Mit einem amorphen Modifikator werden besonders vorteilhafte Ergebnisse erzielt. Im Einzelfall kann es aufgrund der besonderen chemischen Eigenarten des Modifikators nicht möglich sein, diesen vollständig amorph einzustellen. Zu diesen polymeren Modifikatoren zählt im Rahmen der Erfindung das Ethylen-Butylacrylat-Copolymer, dessen Teilkristallinität den oben angesprochenen Rahmen einhält. Ein handelsübliches Erzeugnis ist durch folgende Eigenschaften gekennzeichnet: Schmelzpunkt etwa 50°C, Zugfestigkeit in MPa 3,2, Dehnung 1060%, Shore-Härte A etwa 56 sowie Schmelzindex etwa 12 g/10 min (190°C/2,16 kg). Die Bestimmung der Teilkristallinität bzw. die Bestimmung des amorphen Charakters läßt sich mit Hilfe der DSC-Methode (Differential Scanning Calorimetrie) bestimmen. Diese Methode ergibt sich aus der Literaturstelle "Polymeranalytik Bd. I + II", 1977 von M. Hoffmann, H. Krömer, R. Kuhn, Thieme-Verlag, Stuttgart.

Wenn in einzelnen Fällen ein äußerer polymerer Weichmacher von Vorteil ist, dann werden hier als Modifikatoren EVA, EEA, EBA sowie der "weiche" ASA-Modifikator bevorzugt. Dabei wird ein EBA und EEA mit einem Kristallinitätsgrad von weniger als 15 % bevorzugt. Das EVA hat vorzugsweise einen Vinylacetat-Gehalt von 45 bis 80 Gew.-%, insbesondere 60 bis 70 Gew.-%.

Die folgende Auflistung gibt nähere Einzelheiten von im Rahmen der Erfindung einsetzbaren polymeren Modifikatoren:
EVA: Schmelzindex (190°C/2,16 kg) weniger als 6,0g/10min, insbesondere 2 bis 6 g/10 min. Glasübergangstemperatur T_{g} < -15°C (vorstehende Angaben gelten für einen VA-Gehalt von 63 ± 2 Gew.-%;
VA-Gehalt von 68%: Schmelzindex (190°C/2,16 kg) etwa 30 g/10 min, vorzugsweise 25 bis 35 g; T_{g} < -10°C;
Ethylen-Butylacrylat (EBA): Schmelzindex (190°C/2,16 kg) 10 bis 15 g/10 min, insbesondere 10 bis 13 g/10 min, Schmelzpunkt etwa 50°C, Zugfestigkeit etwa 3 MPa (bestimmt nach DIN 52 910), Shore-Härte A 50 bis 60, insbesondere etwa 55 (bestimmt nach DIN 53 505); Gehalt an Butylacrylat etwa 30 Gew.-%;
SEBS: Gehalt an Styrol gegenüber dem Kautschukanteil 25 bis 35 Gew.-%, insbesondere etwa 30 Gew.-%, Shore-Härte A 20 bis 80, insbesondere etwa 75, Dehnung 300 bis 800% (bestimmt nach DIN 52 910), insbesondere 400 bis 600% und ganz besonders etwa 500%, Zugfestigkeit etwa 5 MPa (bestimmt nach DIN 52 910);
SBS: Styrol zu Kautschukanteil 10 bis 20, insbesondere 13 bis 18 Gew.-%, Shore-Härte A 45 bis 65, insbesondere etwa 55, Dehnung 700 bis 1300%, insbesondere 900 bis 1100% (bestimmt nach DIN 52 910), Zugestigkeit etwa 1 MPa (bestimmt nach DIN 52 910);
ASA-Modifikator: Shore-Härte A 50 bis 60, insbesondere etwa 55; Zugfestigkeit (nach DIN 52 910) 4 bis 8, insbesondere etwa 6; Dehnung (bestimmt nach DIN 52 910) 250 bis 400, insbesondere etwa 300%; Glasumwandlungstemperatur T_{g} < - 10°C;

Im Rahmen der Erfindung lassen sich allein oder auch in Vermischung mit den obenbezeichneten polymeren Weichmachern übliche monomere und vorzugsweise oligomere Weichmacher einsetzen, wie sie aus dem Stand der Technik bekannt sind. Dabei handelt es sich insbesondere um Phthalate (Phthalsäureester), wie Dioctylphthalat (DOP), Diisononylphthalat (DINP), Diisodecylphthalat (DIDP), Dibutylphthalat (DBP), Diisobutylphthalat (DIBP), Dicyclohexylphthalat (DCHP), Dimethylphtalat (DMP), Diethylphthalat (DEP), Benzyl-butyl- (BBP), Butyl-octyl-, Butyl-decylphthalat und Dipentylphtalat, Dimethylglykolphthalat, Dicaprylphthalat (DCP) und dergl., Trimellitate, wie insbesondere Trimellitsäureester mit (überwiegend) linearen C₆- bis C₁₁-Alkoholen niedriger Flüchtigkeit und guter Kälteelastizität, acyclische (aliphatische) Dicarbonsäureester, wie insbesondere Ester der Adipinsäure, wie Dioctyladipat (DOA), Diisodecyladipat (DIDA), insbesondere in Mischung mit Phthalaten, Dibutylsebacat (DBS), Dioctylsebacat (DOS) und Ester der Azelainsäure, insbesondere in Vermischung mit Phthalaten, Dibutylsebacat, oligomere Weichmacher, wie Polyester aus Adipin-, Sebacin-, Azelain- und Phthalsäure mit Diolen, wie 1,3-Butandiol, 1,2-Propandiol, 1,4-Butandiol, und 1,6-Hexandiol, sowie Triolen, wie insbesondere Glycerin und höherwertige Alkohole, Phosphate (Phosphorsäureester), insbesondere Trikresylphosphat (TCF), Triphenylphosphat (TPF), Diphenylkresylphosphat (DPCF), Diphenyloctylphosphat (DPOF), Tris-(2-ethylhexyl)-phosphat (TOF), Tris-(2-butoxyethyl)-phosphat, Fettsäureester, wie insbesondere Butylstearat, Methyl- und butylester der acetylierten Ricinolfettsäure, Triethylenglykol-bis-(2-ethylbutyrat), Hydroxycarbonsäureester, wie insbesondere Citronensäureester, Weinsäureester, Milchsäureester, Epoxidweichmacher, wie insbesondere epoxidierte Fettsäure-Derivate, insbesondere Triglyceride und Monoester, und dergl., wie sie insbesondere als PVC-Weichmacher bekannt sind. In diesem Zusammenhang sei auf Römpp Chemie Lexikon, 9. Aufl., Bd. 6, 1992, S. 5017-5020 verwiesen.

In Einzelfällen kann es von Vorteil sein, zur äußeren Weichmachung ein Gemisch aus einem flüssigen monomeren Weichmacher, insbesondere in Form eines Trimellitsäure- oder Phthalsäureesters, und eines polymeren Modifikators b) einzusetzen. Dabei liegt das Mischungsverhältnis von polymerem Weichmacher zu monomerem Weichmacher vorzugsweise bei 2:1 bis 1:2, insbesondere etwa 1:1.

Nachfolgend soll die erfindungsgemäße Modifizierungsvariante 2) näher beschrieben werden:

Zu den Polymeren, die mit dem ASA hinreichend verträglich sind und ein E-Modul von ≥ 2.000 N/mm² besitzen, zählen insbesondere SAN, α-SAN, Acrylnitril-Alkylacrylat-Copolymer, Acrylnitril-Acrylmethacrylat-Copolymer, ASA, Methacrylat-Butadien-Styrol-Copolymer, ABS, PC, Polyether, Polyurethane und SBR, jeweils einzeln und auch in Vermischung.

Vorzugsweise beträgt das vorstehend bereits angesprochene Mischungsverhältnis bei der Modifizierungsvariante 2) 9:1 bis 7:3.

Gegenstand der Erfindung ist ferner eine Verbundfolie mit einem Substrat, insbesondere in Form eines Polyolefinschaums, Polyurethanschaums oder eines textilen Gebildes, mit einer aufkaschierten erfindungsgemäßen Folie. Vorzugsweise ist der Polyolefinschaum ein Polypropylen- und/oder Polyethylenschaum. Derartige Verbundfolien werden mit Vorteil zur Innenverkleidung von Fahrzeugen beliebiger Art herangezogen.

Die nachfolgenden Ausführungen betreffen sowohl die Modifizierungsvariante **1)** wie auch die Modifizierungsvariante **2)**, sofern nicht ersichtlicherweise eine dieser beiden Varianten allein ansprochen ist.

Wenn im Rahmen der vorliegenden Erfindung von einem mehrphasigen thermoplastischen Kunststoff gesprochen wird, dann soll hierunter auch eine Legierung und dergl. verstanden werden. Dies gilt insbesondere im Zusammenhang mit der erfindungs-gemäßen Modifikation, wonach die Tiefziehfähigkeit unter Einbeziehen von ABS und SAN verbessert wird. Dabei wird gleichzeitig die Wärmeformbeständigkeit und das Fließverhalten beim Tiefziehen und Kalandrieren begünstigt. Insbesondere haben ABS und SAN einen vorteilhaften Einfluß auf die Narbstandfestigkeit.

Bei der praktischen Verwirklichung der vorliegenden Erfindung lassen sich verschiedene weitere Substanzen heranziehen, wie sie bereits eingangs in Form der Verarbeitungshilfsmittel, Farbmittel, Stabilisatoren und anderer üblicher Zusatzstoffe angesprochen wurden. Als Verarbeitungshilfsmittel werden insbesondere C₁₂-C₃₆-Fettsäuren, Fettalkohole, Fettsäureester und -amine, als Farbmittel organische Farbstoffe und Pigmente, wie Titandioxid und Ruß, als Stabilisatoren insbesondere sterisch gehinderte Phenole, Hydrochinone, Benzotriazole, Benzophenone oder sterisch gehinderte Amine und als weitere übliche Zusatzstoffe beispielsweise Füllstoffe, wie insbesondere Ruß, Talk, Kreide und dergl. verwendet.

Die erfindungsgemäßen Folien bzw. Formkörper dienen insbesondere als Ersatz entsprechender Folien bzw. Formkörper auf PVC-Basis. Die bekannten PVC-Materialien lassen sich, was einen gewissen Vorteil darstellt, anhand der üblichen Weichmacher in der gewünschten Härte beliebig einstellen. Andererseits zeigen sie die hinlänglich bekannten Nachteile, wie insbesondere schlechte Abbaubarkeit und damit ihre Bedenklichkeit im Rahmen des Recycling-Gedankens. Überraschenderweise hat es sich gezeigt, daß es durch die erfindungsgemäße Lehre möglich ist, zu jedem entsprechenden PVC-Material ein gleichermaßen gut geeignetes Ersatzmaterial auf der Basis weicher bzw. harter elastomermodifizierter ASA-Materialien zur Verfügung zu stellen. Hierbei stellen sich keine relevanten Probleme ein. Liegt bereits ein ausreichend weiches ASA-Material vor, dann kann durch die Zugabe gemäß der Modifizierungsvariante 2) eine gewünschte Härte durch Einverleibung der härteren Komponenten erreicht werden. Andererseits kann bei härteren ASA-Ausgangsmaterialien eine Verringerung der Härte entsprechend der Modifizierungsvariante 1) erfolgen. Welche der beiden Varianten 1) bzw. 2) letztlich gewählt wird, hängt von dem jeweils zu ersetzenden PVC-Material ab. Somit kann ein geeignetes PVC-Substitut durch einfache Steuerung im Rahmen der vorliegenden Erfindung problemlos und elegant erreicht werden.

Der thermoplastische Kunststoff, anhand dessen die erfindungsgemäße Folie bzw. der erfindungsgemäße Formkörper hergestellt werden, zeichnet sich durch die wünschenswerte Witterungsbeständigkeit aus. Wird mit diesem Material die Folie bzw. der Formkörper gemäß der Erfindung hergestellt, dann zeigen diese Gegenstände eine vorzügliche Narbstandfestigkeit, gute Schmelzfestigkeit sowie ein besonders gutes Tiefziehvermögen, insbesondere bei der angesprochenen Modifikation unter Einverleibung von ABS und/oder SAN. Dieses zeigt sich bei den verschiedenen Tiefziehverfahren, so insbesondere bei dem Vakuumtiefziehverfahren. Tiefgezogene Formteile bzw. Verbundgebilde mit der erfindungsgemäßen Folie können mit besonderem Vorteil in Flugzeugen und Kraftfahrzeugen, insbesondere für Kraftfahrzeuginnenverkleidungen oder -verkleidungsteilen, vorzugsweise Schalttafeln oder Armaturenbrettern, Säulen, Kraftfahrzeugseitenverkleidungen, -türverkleidungen und -ablagen verwendet werden. Auch kann die erfindungsgemäße Folie mit üblichen Techniken auf die verschiedensten flachen bzw. dreidimensionalen Substrate unverformt oder verformt aufgeklebt werden. Sie kann mit weiteren Schichten, wie Schutzschichten, versehen werden. Schließlich können auch Haftschichten auf der Rückseite angebracht werden, gegebenenfalls auch mit geeigneten Schaumschichten kaschiert oder verbunden werden. Auch bestehen gute Möglichkeiten der Oberflächengestaltung, so das Aufbringen von Prägungen, Druckdekoren und die Oberflächenoptik verbessernde Beschichtungen. Ein besonderer Vorteil besteht darin, daß die erfindungsgemäße Folie halogenfrei ist. Damit ist sie in den angesprochenen Anwendungsbereichen ein vorzüglicher Ersatz für die bisher eingesetzten PVC-haltigen Folien.

Nachfolgend wird die Erfindung anhand von 9 Beispielen noch näher erläutert:

### Beispiele 1 bis 7 (Modifizierungsvariante 1)

Die in den nachfolgenden Beispielen bzw. Rezepturen näher bezeichneten Chemikalien sollen zunächst wie folgt definiert werden:

Anhand der sich aus der nachfolgenden Tabelle ergebenden Rezepturen wurde mittels eines 5-Walzenkalanders entweder eine Grundfolie einer Stärke von etwa 0,5 mm oder durch Kalandrieren, ebenfalls auf einem 5-Walzenkalander, und anschließendes thermisches Kaschieren eine 3-schichtige Verbundfolie (je nach Anwendung) hergestellt. Die Eigenschaften der verschiedenen Folien wurden gemessen. Sie werden ebenfalls in der nachfolgenden Tabelle I erfaßt.

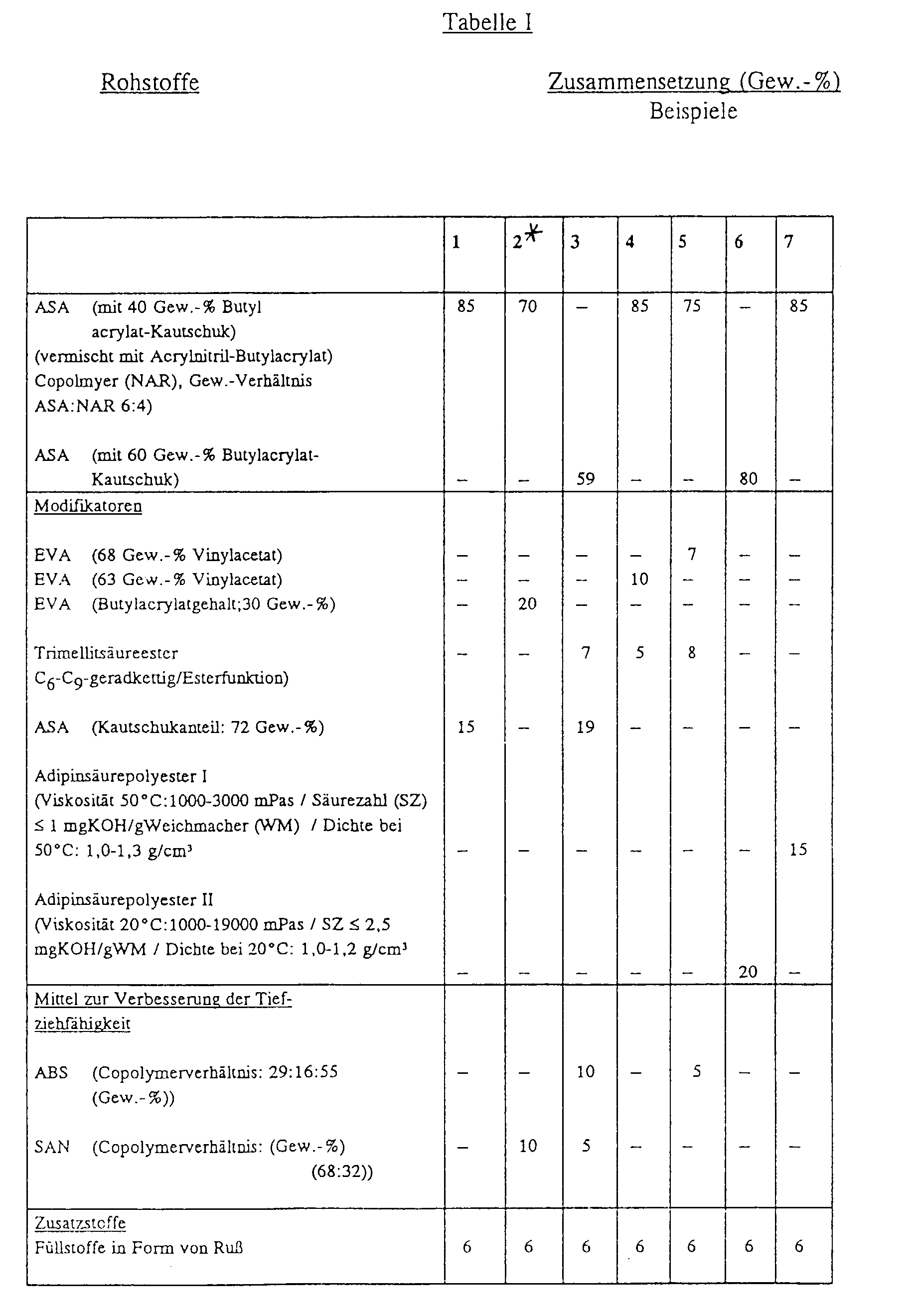

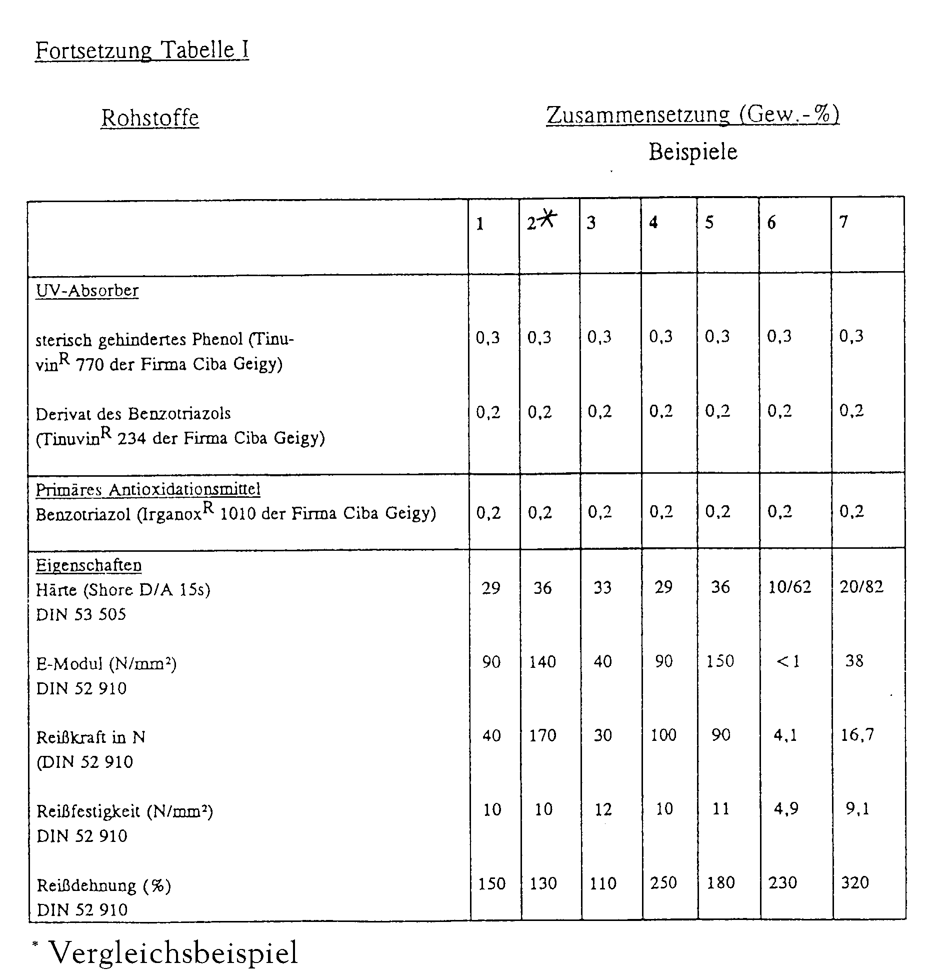

Je nach gewünschtem Anwendungszweck, beispielsweise nach den im Einzelfall geforderten Härtegraden oder gewünschten Tiefzieheigenschaften, lassen sich die erfindungsgemäßen Folie einsetzen. Es zeigt sich somit die besondere Flexibilität der vorliegenden Erfindung im Hinblick auf die unterschiedlichsten Anwendungszwecke. Außer der Tatsache, daß die Folie tiefziehfälhig ist, erfüllt sie auch alle grundlegenden Anforderungen einer Spezifikation, d.h. eine Lichtechtheit nach DIN 75 202, drei Zyklen, beurteilt nach Graumaßstab, von gleich bzw. größer 4, Fogging-Werte nach DIN 75 201 (100°C / 3h) von mehr als 90% Restglanz und Kondensat nach DIN 75 201 (100°C / 16h) von weniger als 1 mg.

### Beispiele 8 und 9 (Modifizierungsvariante 2)

Die Verarbeitung der in der nachfolgenden Tabelle II bezeichneten Materialien erfolgte gemäß den Angaben der vorausgegangenen Beispiele 1 bis 7. Die eingesetzten Rohstoffe sowie die ermittelten Eigenschaften ergeben sich aus der nachfolgenden Tabelle II.

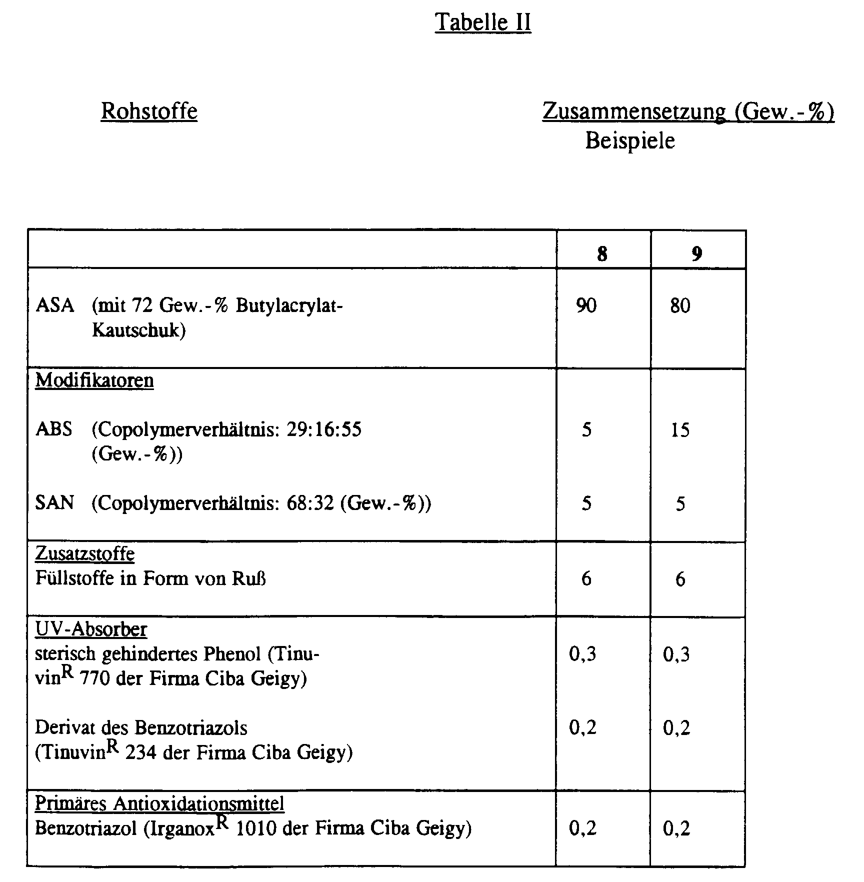

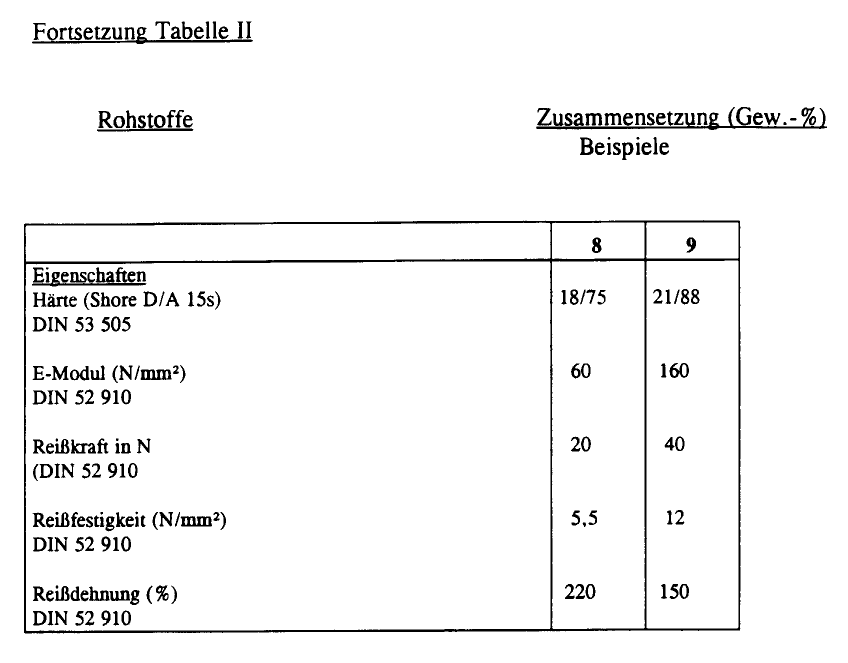

## Patentansprüche

1. Folie oder Formkörper aus einem mehrphasigen thermoplastischen Kunststoff, der einen elastomermodifizierten Thermoplast, einen oder mehrere Modifikatoren als äußeren Weichmacher und gegebenenfalls Verarbeitungshilfsmittel, Farbmittel, Stabilisatoren und andere übliche Zusatzstoffe enthält, dadurch gekennzeichnet, daß der elastomermodifizierte Thermoplast ein Acrylnitril-Styrol-Acrylester-Copolymer (ASA) eines Acrylesteranteils von 25 bis 80 Gew.-% ist, das Mischungsverhältnis (Gewicht/Gewicht) von elastomermodifiziertem Acrylnitril-Styrol-Acrylester-Copolymer (ASA) zu modifizierendem äußeren Weichmacher 9:1 bis 1:1 beträgt und der modifzierende äußere Weichmacher darstellt:
**I)** eine Kombination
a) eines monomeren oder oligomeren Weichmachers, der zur Weichmachung von PVC üblich ist, und
b) eines amorphen oder teilkristallinen polymeren Weichmachers eines Kristallinitätsgrades von höchstens 25 % in Form von Ethylen-Vinylacetat-Copolymer (EVA), Ethylen-Butylacrylat-Copolymer (EBA), hydriertem und nicht hydriertem Styrol-Butadien-Styrol-Blockcopolymer (SEBS bzw. SBS) und/oder Acrylnitril-Styrol-Acrylester-Copolymer (ASA) eines Acrylesteranteils von 70 bis 80 Gew.-%, oder
**II)** einen monomeren oder oligomeren Weichmacher, der zur Weichmachung von PVC iiblich ist, oder
**III)** einen amorphen oder teilkristallinen polymeren Weichmacher eines Kristallinitätsgrades von höchstens 25 % in Form von Ethylen-Butylacrylat-Copolymer (EBA), nicht hydriertem Styrol-Butadien-Styrol-Block-Copolymer (SBS) und/oder Acrylnitril-Styrol-Acrylester-Copolymer (ASA) eines Acrylesteranteils von 70 bis 80 Gew.- %.

2. Folie oder Formkörper nach Anspruch 1, dadurch gekennzeichnet, daß der äußere Weichmacher eine Kombination aus Trimellitsäureester und einem polymeren Weichmacher b) darstellt.

3. Folie oder Formkörper nach Anspruch 1, dadurch gekennzeichnet, daß der Anteil an Acrylester im ASA des modifizierenden äußeren Weichmachers 70 bis 75 Gew.-% beträgt.

4. Folie oder Formkörper nach Anspruch 1, dadurch gekennzeichnet, daß die polymeren äußeren Weichmacher eine Kristallinität von weniger als 15%, insbesondere weniger als 5 % haben und insbesondere amorph sind.

5. Folie oder Formkörper nach Anspruch 1, dadurch gekennzeichnet, daß der polymere äußere Weichmacher ein amorphes EVA, amorphes ASA und/oder Ethylen-Butylacrylat-Copolymer eines Kristallinitätsgrades von weniger als 15 % ist.

6. Folie oder Formkörper nach Anspruch 5, dadurch gekennzeichnet, daß das amorphe EVA einen Vinylacetat-Gehalt von 45 bis 80 Gew.-% aufweist.

7. Folie oder Formkörper nach mindestens einem der vorhergehenden Ansprüche, dadurch gekennzeichnet, daß der Acrylester im ASA ein Butylacrylat ist.

8. Folie oder Formkörper nach mindestens einem der vorhergehenden Ansprüche, dadurch gekennzeichnet, daß der Anteil an Acrylester im ASA des elastomermodifizierten Thermoplasts 30 bis 65 Gew.-% beträgt.

9. Folie oder Formkörper nach mindestens einem der vorhergehenden Ansprüche, dadurch gekennzeichnet, daß darin zusätzlich ein Styrol-Copolymer in Form eines Acrylnitril-Butadien-Styrol-Copolymers und/oder eines Styrol-Acrylnitril-Copolymers (SAN) enthalten ist.

10. Folie oder Formkörper aus einem mehrphasigen thermoplastischen Kunststoff, der einen elastomermodifizierten Thermoplast, einen oder mehrere Modifikatoren und gegebenenfalls Verarbeitungshilfsmittel, Farbmittel, Stabilisatoren und andere übliche Zusatzstoffe enthält, dadurch gekennzeichnet, daß der elastomermodifizierte Thermoplast ein Acrylnitril-Styrol-Acrylester-Copolymer (ASA) eines Acrylesteranteils von 25 bis 80 Gew.-% ist und zur Anhebung der Härte eines weichen ASA-Copolymers als Modifikator ein Polymer hinreichender Verträglichkeit mit dem ASA-Copolymer und eines E-Moduls von ≥ 2000 N/mm² einverleibt ist, wobei das Mischungsverhältnis von weichem ASA-Copolymer zu härtendem Copolymer 20:1 bis 1:1 beträgt.

11. Folie oder Formkörper nach Anspruch 10, dadurch gekennzeichnet, daß die Polymeren, die mit dem ASA hinreichend verträglich sind SAN, α-SAN, Acrylnitril-Alkylacrylat-Copolymer, Acrylnitril-Alkylmethacrylat-Copolymer, ASA, Methacrylat-Butadien-Styrol-Copolymer, ABS, PC, Polyether, Polyurethane und SBR, jeweils einzeln und auch in Vermischung, sind.

12. Verwendung der Folie nach mindestens einem der Ansprüche 1 bis 11 zur Herstellung einer Verbundfolie, wobei die Folie auf ein Substrat in Form eines Polyolefinschaums oder eines textilen Gebildes aufkaschiert wird.

13. Verwendung nach Anspruch 12, dadurch gekennzeichnet, daß der Polyolefinschaum ein Polypropylen und/oder Polyethylen-Schaum ist.

## Claims

1. Sheeting or moulding made of a thermoplastic which has more than one phase and which comprises an elastomer-modified thermoplastic, one or more modifiers as external plasticizer and, if desired, processing aids, colourants, stabilizers and other usual additives, characterized in that the elastomer-modified thermoplastic is an acrylonitrile-styrene-acrylate copolymer (ASA) of from 25 to 80% by weight acrylate content, the mixing ratio (weight/weight) of elastomer-modified acrylonitrile-styrene-acrylate copolymer (ASA) to modifying external plasticizer is from 9:1 to 1:1 and the modifying external plasticizer is:
I) a combination of
a) a monomeric or oligomeric plasticizer which is usual for plasticizing PVC, and
b) an amorphous or partly crystalline polymeric plasticizer of a degree of crystallinity of not more than 25% in the form of ethylene-vinyl acetate copolymer (EVA), ethylene-butyl acrylate copolymer (EBA), hydrogenated and non-hydrogenated styrene-butadiene-styrene block copolymer (SEBS and SBS, respectively) and/or acrylonitrile-styrene-acrylate copolymer (ASA) of from 70 to 80% by weight acrylate content, or
II) a monomeric or oligomeric plasticizer which is usual for plasticizing PVC, or
III) an amorphous or partly crystalline polymeric plasticizer of a degree of crystallinity of not more than 25% in the form of ethylene-butyl acrylate copolymer (EBA), non-hydrogenated styrene-butadiene-styrene block copolymer (SBS) and/or acrylonitrile-styrene-acrylate copolymer (ASA) of from 70 to 80% by weight acrylate content.

2. Sheeting or moulding according to Claim 1, characterized in that the external plasticizer is a combination of trimellitic ester and a polymeric plasticizer b).

3. Sheeting or moulding according to Claim 1, characterized in that the proportion of acrylate in the ASA of the modifying external plasticizer is from 70 to 75% by weight.

4. Sheeting or moulding according to Claim 1, characterized in that the polymeric external plasticizers have a crystallinity of less than 15%, in particular less than 5%, and in particular are amorphous.

5. Sheeting or moulding according to Claim 1, characterized in that the polymeric external plasticizer is an amorphous EVA, amorphous ASA and/or ethylene-butyl-acrylate copolymer of a degree of crystallinity of less than 15%.

6. Sheeting or moulding according to Claim 5, characterized in that the amorphous EVA has a vinyl acetate content of from 45 to 80% by weight.

7. Sheeting or moulding according to at least one of the preceding claims, characterized in that the acrylate in the ASA is a butyl acrylate.

8. Sheeting or moulding according to at least one of the preceding claims, characterized in that the proportion of acrylate in the ASA of the elastomer-modified thermoplastic is from 30 to 65% by weight.

9. Sheeting or moulding according to at least one of the preceding claims, characterized in that a styrene copolymer in the form of an acrylonitrile-butadiene-styrene copolymer and/or of a styrene-acrylonitrile copolymer (SAN) is additionally present therein.

10. Sheeting or moulding made of a thermoplastic which has more than one phase and which comprises an elastomer-modified thermoplastic, one or more modifiers and, if desired, processing aids, colourants, stabilizers and other usual additives, characterized in that the elastomer-modified thermoplastic is an acrylonitrile-styrene-acrylate copolymer (ASA) of from 25 to 80% by weight acrylate content and a polymer of adequate compatibility with the ASA copolymer and having a modulus of elasticity ≥ 2000 N/mm² is incorporated to increase the hardness of a soft ASA copolymer as modifier, the mixing ratio of soft ASA copolymer to hardening copolymer being from 20:1 to 1:1.

11. Sheeting or moulding according to Claim 10, characterized in that the polymers which are adequatley compatible with the ASA are SAN, α-SAN, acrylonitrile-alkyl acrylate copolymer, acrylonitrile-alkyl methacrylate copolymer, ASA, methacrylate-butadienestyrene copolymer, ABS, PC, polyethers, polyurethanes and SBR, in each case individually or else in a mixture.

12. Use of the sheeting according to at least one of Claims 1 to 11 for the manufacture of composite sheeting, the sheeting being laminated onto a substrate in the form of a polyolefin foam or a textile product.

13. Use according to Claim 12, characterized in that the polyolefin foam is a polypropylene and/or polyethylene foam.

## Revendications

1. Feuille ou pièce moulée en une matière synthétique thermoplastique multiphase, qui contient une matière thermoplastique modifiée par un élastomère, un ou plusieurs modificateurs comme plastifiants externes et, le cas échéant, des substances auxiliaires de mise en oeuvre, des matières colorantes, des agents stabilisants et d'autres additifs classiques, caractérisée en ce que la matière thermoplastique modifiée par un élastomère est un copolymère acrylonitrile-styrène-ester acrylique (ASA) contenant une proportion d'ester acrylique de 25 à 80 % en poids, le rapport de mélange (en poids/poids) du copolymère acrylonitrile-styrène-ester acrylique (ASA) modifié par un élastomère au plastifiant externe modificateur s'élève à une valeur de 9:1 à 1:1 et le plastifiant externe modificateur représente :
I) une association
a) d'un plastifiant monomère ou oligomère qui est usuel pour la plastification de PVC et
b) d'un plastifiant polymère amorphe ou partiellement cristallin ayant un degré de cristallinité au maximum égal à 25 % sous forme d'un copolymère éthylène-acétate de vinyle (EVA), d'un copolymère éthylène-acrylate de butyle (EBA), d'un copolymère séquencé styrène-butadiène-styrène hydrogéné et non hydrogéné (SEBS et respectivement SBS) et/ou d'un copolymère acrylonitrile-styrène-ester acrylique (ASA) contenant une proportion d'ester acrylique de 70 à 80 % en poids, ou bien
II) un plastifiant monomère ou oligomère qui est usuel pour la plastification de PVC, ou bien
III) un plastifiant polymère amorphe ou partiellement cristallin d'un degré de cristallinité au maximum égal à 25 % sous forme d'un copolymère éthylène-acrylate de butyle (EBA), d'un copolymère séquencé styrène-butadiène-styrène non hydrogéné (SBS) et/ou d'un copolymère acrylonitrile-styrène-ester acrylique (ASA) contenant une proportion d'ester acrylique de 70 à 80 % en poids.

2. Feuille ou pièce moulée suivant la revendication 1, caractérisée en ce que le plastifiant externe représente une association d'un ester d'acide trimellitique et d'un plastifiant polymère b).

3. Feuille ou pièce moulée suivant la revendication 1, caractérisée en ce que la proportion d'ester acrylique dans l'ASA du plastifiant externe modifié s'élève à 70-75 % en poids.

4. Feuille ou pièce moulée suivant la revendication 1, caractérisée en ce que les plastifiants externes polymères ont une cristallinité de moins de 15 %, notamment de moins de 5 %, et sont en particulier amorphes.

5. Feuille ou pièce moulée suivant la revendication 1, caractérisée en ce que le plastifiant externe polymère est un EVA amorphe, un ASA amorphe et/ou un copolymère éthylène-acrylate de butyle ayant un degré de cristallinité inférieur à 15 %.

6. Feuille ou pièce moulée suivant la revendication 5, caractérisée en ce l'EVA amorphe présente une teneur en acétate de vinyle de 45 à 80 % en poids.

7. Feuille ou pièce moulée suivant au moins l'une des revendications précédentes, caractérisée en ce que l'ester acrylique dans l'ASA est un acrylate de butyle.

8. Feuille ou pièce moulée suivant au moins l'une des revendications précédentes, caractérisée en ce que la proportion d'ester acrylique dans l'ASA de la matière thermoplastique modifiée par un élastomère a une valeur de 30 à 65 % en poids.

9. Feuille ou pièce moulée suivant au moins l'une des revendications précédentes, caractérisée en ce qu'elle contient en outre un copolymère de styrène sous forme d'un copolymère acrylonitrile-butadiène-styrène et/ou d'un copolymère styrène-acrylonitrile (SAN).

10. Feuille ou pièce moulée en une matière synthétique thermoplastique multiphase, qui contient une matière thermoplastique modifiée par un élastomère, un ou plusieurs modificateurs et le cas échéant des agents auxiliaires de mise en oeuvre, des matières colorantes, des agents stabilisants et d'autres additifs classiques, caractérisée en ce que la matière thermoplastique modifiée par un élastomère est un copolymère acrylonitrile-styrène-ester acrylique (ASA) contenant une proportion d'ester acrylique de 25 à 80 % en poids et, pour élever la dureté d'un copolymère ASA mou, un polymère suffisamment compatible avec le copolymère ASA et de module d'élasticité supérieur ou égal à 2000 N/mm² est incorporé comme modificateur, le rapport de mélange du copolymère ASA mou au copolymère durcissant va de 20:1 à 1:1.

11. Feuille ou pièce moulée suivant la revendication 10, caractérisée en ce que les polymères qui sont suffisamment compatibles avec l'ASA sont un SAN, un α-SAN, un copolymère acrylonitrile-acrylate d'alkyle, un copolymère acrylonitrile-méthacrylate d'alkyle, un ASA, un copolymère méthacrylate-butadiène-styrène, un ABS, un TC, des polyéthers, des polyuréthannes et un SBR, chacun individuellement ou aussi en mélange.

12. Utilisation de la feuille suivant au moins l'une des revendications 1 à 11 pour la fabrication d'une feuille composite, dans laquelle la feuille est appliquée par doublage sur un substrat sous forme d'une mousse de polyoléfine ou d'un corps textile.

13. Utilisation suivant la revendication 12, caractérisée en ce que la mousse de polyoléfine est une mousse de polypropylène et/ou de polyéthylène.
